# EUROPEAN PATENT SPECIFICATION

(11) **EP 3 464 166 B1**
(45) Date of publication and mention of the grant of the patent: **25.12.2024**
(21) Application number: 17803751.1
(22) Date of filing: 30.05.2017
(51) Int. Cl.: B67D 7/80, F25D 3/00, C02F 1/44, F28C 3/08, C02F 1/32, C02F 1/66, C02F 1/42

(54) **WATER-SAVINGS ADIABATIC SPRAY SYSTEM**
WASSERSPARENDES ADIABATISCHES SPRÜHSYSTEM
SYSTÈME DE PULVÉRISATION ADIABATIQUE À ÉCONOMIE D'EAU

(30) Priority: 27.05.2016 US 201662342717 P
(43) Date of publication of application: 10.04.2019
(73) Proprietor: Evapco, Inc., Taneytown, MD 21787 (US)
(72) Inventor: LANE, John W., Taneytown, Maryland 21787 (US); VADDER, Davey J., Taneytown, Maryland 21787 (US)
(74) Representative: Barker Brettell LLP
(86) International application number: PCT/US2017/034989
(87) International publication number: WO 2017/205869

(56) References cited:
- CN-U- 202 254 522
- JP-A- 2016 056 959
- US-A- 4 160 727
- US-A- 5 536 411
- US-A1- 2004 050 792
- US-A1- 2011 192 179
- US-A1- 2014 054 222
- US-A1- 2015 330 725
- US-B2- 8 206 581

## Description

### FIELD OF THE INVENTION

This invention air-cooled fluid coolers and condensers.

### DESCRIPTION OF THE BACKGROUND

Air-cooled heat exchangers such as fluid coolers and condensers reject heat to the atmosphere. These devices reject heat by sensible heating of the ambient air; therefore the lowest temperature they can achieve is some temperature above the ambient dry bulb temperature. By use of adiabatic cooling, the ambient air can be cooled to a temperature approaching the wet bulb temperature. This pre-cooled air is then used to reject heat. By use of adiabatic cooling, a dry-cooling heat exchanger can be made smaller (less expensive) or can cool to a lower temperature (more energy efficient) or some combination of the two.

There are two typical ways that adiabatic cooling is performed. One way is to cool the air with saturated pads. Thick pads are placed at the inlet to the air-cooled heat exchanger. These pads are saturated with water. When incoming air is drawn across these pads, some of the water is evaporated and the air is cooled. Although these pads are in widespread use, they have several drawbacks. To full saturate the pads, a heavy stream of water needs to be run over the pads. Most of this water is not evaporated and is either sent to drain or recirculated. Sending this water to drain is very inefficient, while recirculation requires another system to treat and periodically drain the water. Additionally, these pads are made of a material that absorbs water and they have a life expectancy of only a few years before needing to be replaced. Furthermore, the pads are left in place year round, even when adiabatic cooling is not used. The pads cause a resistance to air flow and require higher fan horsepower all year round.

The second typical way to generate adiabatic cooling is by the use of misting nozzles. Misting nozzles generate small droplets of water that quickly evaporate thus cooling the air. Misting nozzles spray water at a lower rate than water is streamed over the saturated pads, thus there is no need for a recirculation system and less water is used. The nozzles do not cause any resistance to air flow, so fan horsepower is kept at a minimum. One issue with misting nozzles is that the minerals that are contained in the spray must pass through the coils and these minerals can cause issues. In a pad system these minerals stay with the excess water that is sent over the pads or is trapped on the pads themselves.

To prevent scaling, particularly of calcium carbonate, soft water or softened water must be used with misting nozzles. If hard water is sprayed, scale can form at the nozzles and on the coils. To minimize this problem many manufacturers severely limit the number of hours that the adiabatic sprays can be run each year. Scaling can be avoided by using softened water. Softening replaces the +2 valence cations in the water with sodium. Sodium salts are highly soluble and thus will not form a scale. The concern with softened water is that all of the anions that were present in the hard water are still present in the softened waters. These anions, particularly chloride, sulfate, and hydroxide, can be very corrosive to the coils and fins. This is particularly true if the salts are allowed to stay on the coils for extended period of time. To minimize these corrosion effects many manufacturers limit the number of hours that the adiabatic sprays can be run each year with softened water.

The solution for running extended hours with an adiabatic spray system is to use very low mineral water. Typically reverse osmosis ("RO") water is used for these extended-hour systems. Low-cost RO systems are available that can provide sufficient RO water to operate a cell at a reasonable cost. These low-cost units operate off of domestic water pressure without the need of a separate high-pressure pump. These RO devices should be fed softened water for best membrane life. The RO will remove most of the sodium ions as well as most of the corrosive anions. The resulting water is often less corrosive than rainwater to the materials of construction of the heat exchanger.

There are issues with using these low-cost RO systems for adiabatic cooling. One is that these systems are inefficient on water use. The table below illustrates the output of a low-cost, high-volume RO. Fully 65% of the raw softened water is discarded in order to generate 35% clean water.

| Sample | Sodium | Chloride | Sulfate | Alkalinity (hydroxide) | % of Flow |
|---|---|---|---|---|---|
| Input Raw Softened Feed-Water | 120 ppm | 57 ppm | 24 ppm | 168 ppm | 100% |
| Output RO Permeate Water | 2.5 ppm | 1 ppm | >1 ppm | 5 ppm | 35% |
| Output RO Reject Water | 183 ppm | 85 ppm | 41 ppm | 247 ppm | 65% |

Another issue is that even though a single unit is not too expensive, a single unit can provide sufficient misting for only about a single cell; most units will have 4 or more cells thus requiring multiple RO units. A known adiabatic pre-cooling system for a heat exchange unit is disclosed in JP 2016/056959. Another example of a device for cooling air with softened water is disclosed in the document CN202254522U.

### SUMMARY OF THE INVENTION

An embodiment of the invention provides a method to use softened water for adiabatic cooling without severely limiting the hours of operation each year. According to the invention, softened water may be used to provide adiabatic cooling over extended hours, with a periodic reverse osmosis "RO" flush of the coils. In another embodiment of the invention, the RO-reject stream from generating the pure water for the RO flush may be combined with softened water and used for adiabatic cooling thus using the RO-reject water for cooling instead of discarding. In another embodiment, particularly for small units, no softened water is used directly. According to this embodiment, the cooling system operates with RO-reject water for the spray, while storing the RO-purified water ("RO-permeate"). The system then switches to RO-pure with additional flow added to flush the coil while RO-reject is stored. In both of these embodiments no RO-reject is discarded. A first aspect of the invention is defined in claim 1, and a second aspect of the invention is defined in claim 8.

### BRIEF DESCRIPTION OF THE DRAWINGS

Figure 1 is a schematic according to a first embodiment of the invention.
Figure 2 is a schematic according to a second embodiment of the invention.
Figure 3 is a schematic according to a third embodiment of the invention.

### DETAILED DESCRIPTION

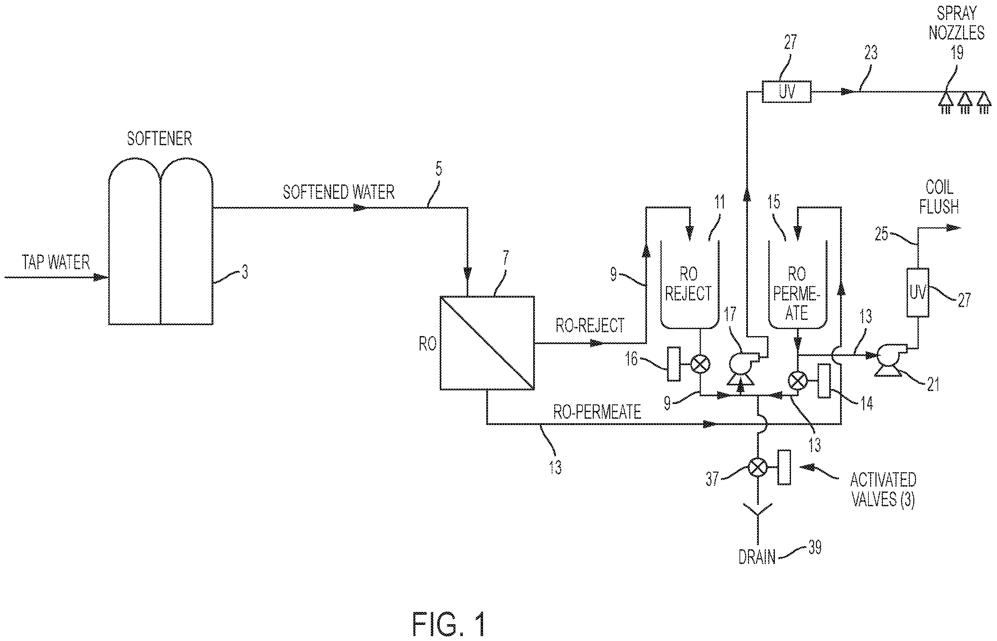

**Figure 1** illustrates one embodiment of the invention. In this embodiment tap water or different source water is sent to a softener **3.** The softener is only necessary if the source water is moderately hard or harder. The softener operates by ion exchange to replace calcium and magnesium ions in the source water with sodium ions. The softened water **5** is then fed to a reverse osmosis device 7 ("RO"). The RO 7 shown in Figure 1 is a standard commercially available device that operates on source-water pressure. A more complex RO system with a high pressure pump may be used, but this type of RO system is usually too expensive for an adiabatic system.

The RO reject water **9** with concentrated minerals is directed to the RO-Reject storage tank **11;** the RO permeate **13** is directed to the RO-Permeate storage tank **15.** A spray pump **17** is connected to receive water from either the RO-Reject storage tank **11** or the RO-Permeate storage tank **15** depending on the position of valves **14** and **16.** The spray pump **17** provides flow to the misting nozzles **19** for cooling. When operating from the RO-Reject tank **11,** the nozzles **19** will mist high mineral containing water but not scale-forming water since the scale forming minerals have been removed by softening. Some of the minerals may deposit on the coil and fins and if left could result in corrosion. To prevent this corrosion, pure mineral free water (RO-Permeate) **13** is periodically used to flush the coil via flush pump **21** removing any minerals that may have deposited on the fins and coils. Optionally some of this RO permeate water **13** could be sent to the nozzles for additional cooling by opening valve **14** and closing valve **16.** Both the spray nozzle line **23** and the coil flush line **25** could be configured with a UV system **27** to minimize the potential for the growth of pathogenic bacteria such as *Legionellae.* The system also is configured to allow complete drainage when not in use to eliminate the risk of biological growth in stagnant water or freezing. In this design 100% of the water sent to the RO **7** is utilized either for cooling or flushing the coil.

The system also is configured to allow complete drainage via valves **14, 16,** and **37** and drain **39** when not in use to eliminate the risk of biological growth in stagnant water or freezing.

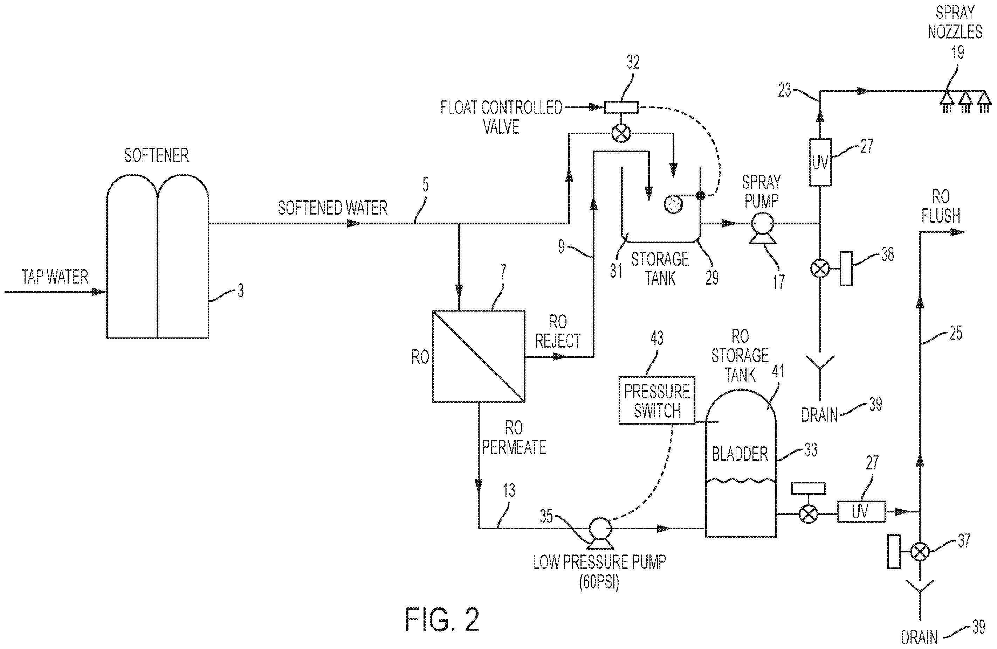

**Figure 2** illustrates another embodiment of the invention. In this embodiment tap water or different source water is sent to a softener **3.** The softener **3** is only necessary if the source water is moderately hard or harder. The softener **3** operates by ion exchange to replace calcium and magnesium ions in the source water with sodium ions. The softened water **5** is then fed to a reverse osmosis device **7** ("RO"). The RO 7 shown in Figure 2 is a standard commercially available device that operates on source-water pressure. A more complex RO system with a high pressure pump may be used, but this type of RO system is usually too expensive for an adiabatic system.

The RO-Reject water **9** is sent to a storage tank **29** where it combines with additional softened water **5.** This combined softened/RO reject water **31** is used for cooling by sending to the spray pump **17.** Since all of the water has been softened, this water will not result in scaling on the fins. When operating from the RO-Reject/softened-water tank **29,** the nozzles **19** will mist high mineral containing water but not scale-forming water since the scale forming minerals have been removed by softening. Some of the minerals may deposit on the coil and fins and if left could result in corrosion. To prevent this corrosion, pure mineral free water (RO-Permeate) **13** is periodically used to flush the coil.

The RO-Permeate water **13** is sent to a pressurized storage tank **33 via** low pressure pump **35.** The pressure in the storage tank 33 may be maintained and/or adjusted via bladder **41,** pressure switch **43** and low pressure pump **35.** Because storage tank **33** is pressurized, a smaller RO unit can be used and run at night or other times that adiabatic cooling is unnecessary. Periodically this RO-permeate water **13** is used to flush the coils removing any minerals that may have deposited on the fins and coils.

Both the spray nozzle line **23** and the coil flush line **25** may be configured with a UV system **27** to minimize the potential for the growth of pathogenic bacteria such as Legionella. The system also is configured to allow complete drainage via valves **37** and **38** and drains **39** when not in use to eliminate the risk of biological growth in stagnant water or freezing. In this design not only is 100% of the water sent to the RO used either cooling or flushing, but fewer systems or smaller RO units are needed as the RO-permeate water **13** is used only to flush the coils.

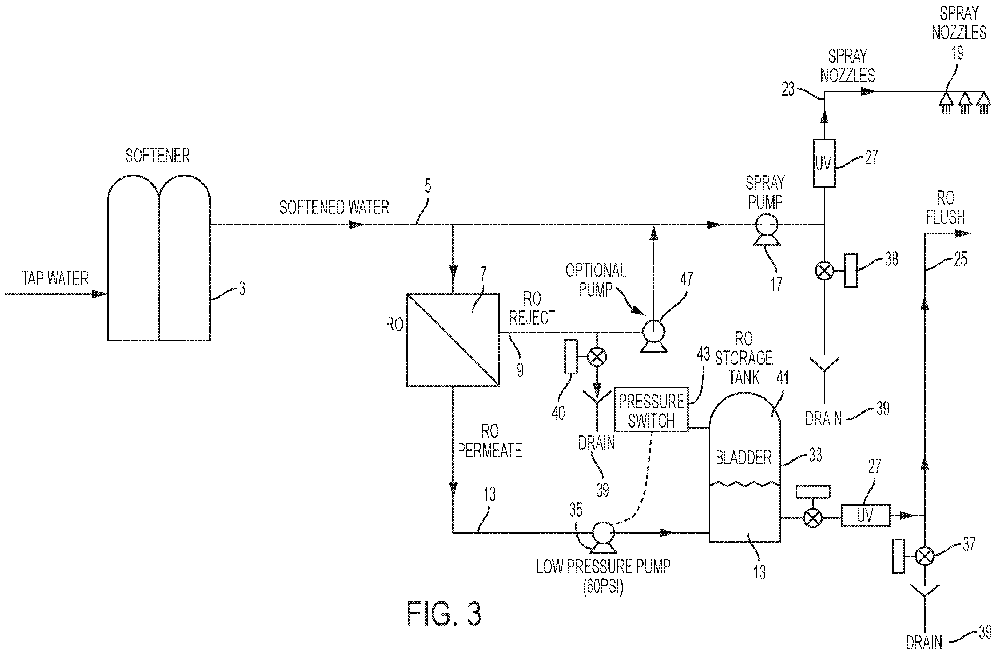

**Figure 3** illustrates another embodiment of the invention. This embodiment is similar to the one in **Figure 2** except that the RO-rej ect water **9** is sent to drain **39.** By sending the RO-reject water to drain **39,** the system can be greatly simplified as the RO-reject/softened-water storage tank **29** and float control valve **32 (****Fig. 2****)** can be eliminated. The disadvantage is that the RO-reject water is discarded. Some of the reject water can be recovered if the RO is operated when the spray pump **17** is energized. By use of an auxiliary pump **47** or aspiration and additional drain valve **40,** the RO-reject water **9** could be combined with the softened water **5** and used for cooling.

The fundamental problem that is corrected by this invention is the corrosion of fins and coils caused by extensive use of softened water. For cost and heat-transfer abilities aluminum and aluminum alloys are extensively used in air-cooled heat exchangers. Aluminum is very sensitive to pH both high and low (amphoteric). For corrosion protection, often the aluminum is coated which adds cost, reduces heat transfer, and is still subject to corrosion at the inevitable holidays in the coating. Aluminum is very resilient to aqueous corrosion at near neutral pH. If the water leaving the softener is not near neutral (5 to 8.5) then that water must be pH adjusted before use. Fortunately most water used for adiabatic cooling will fall within this pH guideline.

Aluminum is also subject to corrosion by salts that have dried on the surface. Most of these salts are hygroscopic and will absorb sufficient moisture from the atmosphere when the relative humidity is greater than 60%. Thus corrosion can occur even in seemingly dry conditions.

Another embodiment of this invention is a method for determining how often to flush the coil. The amount of water to be flushed on the coil is related to both the quantity of water sprayed for cooling and the amount of ions in the spray water. For example, a typical 5' x 6' air-cooled cell will require approximately 40 gallons per hour (150 liters/hour) of spray for adiabatic cooling. Most of the minerals in that water will harmlessly pass through the coil but up to 1% of these minerals could accumulate on the coils. If the water contains 500 ppm of dissolved solids then 500 mg/liter x 150 liters x 1% = 750 mg will be deposited on the coils and fins every hour of spray operation. The corrosive effect of these salts will be ameliorated by a flush of RO-permeate water. A flush of only 20 liters of RO-permeate water will dilute this surface contamination to 750mg/20 liter = 37.5 ppm. The lower this value, the less the corrosion attack will occur. A value less than 100 ppm is unlikely to be a corrosion concern. For a typical air-cooler 5' x 6' about 20 liters (5 gallons) are necessary to assure that all surfaces are flushed. With this example, flushing every 2 hours and at the end of adiabatic cooling cycle would be sufficient to minimize corrosion. Thus by flushing with only 20 liters of RO-permeate water, 300 liters of softened water can be used for cooling without significant corrosion attack on the coils and fins.

## Claims

1. A water supply system for delivering water used for adiabatically cooling air in a heat exchanger, comprising:
a water softener (3) configured to receive water from a water source;
a reverse osmosis device (7) configured to receive softened water (5) from said water softener;
an RO-permeate storage tank (15) configured to receive RO-permeate water (13) from said reverse osmosis device;
a flush pump (21) configured to deliver RO-permeate water (13) from said RO-permeate storage tank (15) to surfaces of a coil of said heat exchanger via a coil flush line (25);
an RO-reject storage tank (11) configured to receive RO-reject water (9) from said reverse osmosis device (7);
a RO-permeate water line (13) comprising a valve (14) configured to deliver RO-permeate water from the RO-permeate storage tank (15) to a spray pump (17);
a RO-reject water line (9) comprising a valve (16) configured to deliver RO-reject water from the RO-reject storage tank (11) to the spray pump (17);
spray nozzles (19) receiving water from the spray pump (17) via a spray nozzle line (23).

2. A water supply system according to claim 1, wherein said RO-reject-storage tank (11) is configured to receive softened water directly from said softener (3) and RO-reject water (9) from said reverse osmosis device (7), and wherein said spray pump (17) is configured to deliver combined water softened and RO-reject water from the RO-reject storage tank (11) to said spray nozzles (19).

3. A water supply system according to claim 1, wherein said RO-permeate storage tank (15) is a pressurized tank.

4. A water supply system according to claim 2, wherein said RO-permeate storage tank (15) is a pressurized tank.

5. A water supply system according to claim 1, further comprising piping connected to said reverse osmosis device (7) to deliver RO-reject water to a drain (39), and wherein said spray pump (17) receives softened water directly from said water softener (3).

6. A water supply system according to claim 5, further comprising an RO-reject pump (47) connected to said reverse osmosis device (7) for pumping RO-reject water (9) to said spray pump (17).

7. A method for inhibiting scaling and corrosion of metal surfaces in a heat exchanger used for adiabatically cooling air using a system according to claims 1-6, comprising:
receiving water from the water source;
softening water from the water source in the water softener (3) thereby producing softened water;
delivering the softened water (5) to the reverse osmosis device (7) thereby producing a RO-reject water and a RO-permeate water and applying a cooling operation and a flush operation;
whereby the cooling operation comprises storing at least a part of the RO-permeate water from said reverse osmosis device (7) in said RO-permeate storage tank (13);
and delivering RO-reject water from said RO-reject storage tank (11) receiving RO-reject water from said reverse osmosis device (7) and optionally a part of the RO-permeate water to said spray nozzles (19) via said RO-reject water line (9);
whereby the flush operation comprises delivering said stored RO-permeate water to the surfaces of said coil via said coil flush line (25).

8. A method according to claim 7, wherein stored RO-permeate water (13) is also delivered to said spray nozzles (19) during said cooling operation, provided sufficient RO-permeate water is retained in storage for use during a subsequent flush operation.

9. A method according to claim 7, wherein RO-reject water (9) from said reverse osmosis device (7) is combined with softened water received directly from a water softener (3) and delivered to said spray nozzles (19) during a cooling operation.

10. A method according to claim 7, wherein RO-reject water (9) from said reverse osmosis device (7) is combined with softened water received directly from a water softener (3) and stored in a combination and storage tank (29), and water from said combination and storage tank is delivered to said spray nozzles (19) during a cooling operation.

11. A method according to claim 7, wherein said stored RO-permeate water (13) is stored in a pressurized tank.

12. A method according to claim 10, wherein said stored RO-permeate water (13) is stored in a pressurized tank.

## Patentansprüche

1. Wasserzufuhrsystem zum Liefern von Wasser, das zum adiabatischen Kühlen von Luft in einem Wärmetauscher verwendet wird, Folgendes umfassend:
einen Wasserenthärter (3), ausgelegt zum Empfangen von Wasser von einer Wasserquelle;
eine Umkehrosmosevorrichtung (7), ausgelegt zum Empfangen von enthärtetem Wasser (5) aus dem Wasserenthärter;
einen UO-Permeatspeichertank (15), ausgelegt zum Empfangen von UO-Permeatwasser (13) aus der Umkehrosmosevorrichtung;
eine Spülpumpe (21), ausgelegt zum Liefern von UO-Permeatwasser (13) aus dem UO-Permeatspeichertank (15) zu Oberflächen einer Wendel des Wärmetauschers über eine Wendelspülleitung (25);
einen UO-Ausschussspeichertank (11), ausgelegt zum Empfangen von UO-Ausschusswasser (9) aus der Umkehrosmosevorrichtung (7);
eine UO-Permeatwasserleitung (13), umfassend ein Ventil (14), das ausgelegt ist zum Liefern von UO-Permeatwasser aus dem UO-Permeatspeichertank (15) zu einer Sprühpumpe (17);
eine UO-Ausschusswasserleitung (9), umfassend ein Ventil (16), das ausgelegt ist zum Liefern von UO-Ausschusswasser aus dem UO-Ausschusstank (11) zur Sprühpumpe (17);
Sprühdüsen (19), die über eine Sprühdüsenleitung (23) Wasser von der Sprühpumpe (17) empfangen.

2. Wasserzufuhrsystem nach Anspruch 1, wobei der UO-Ausschussspeichertank (11) ausgelegt ist zum Empfangen von enthärtetem Wasser direkt von dem Enthärter (3) und UO-Ausschusswasser (9) von der Umkehrosmosevorrichtung (7), und wobei die Sprühpumpe (17) ausgelegt ist zum Liefern von kombiniertem enthärtetem Wasser und UO-Ausschusswasser aus dem UO-Ausschussspeichertank (11) zu den Sprühdüsen (19).

3. Wasserzufuhrsystem nach Anspruch 1, wobei der UO-Permeatspeichertank (15) ein druckbeaufschlagter Tank ist.

4. Wasserzufuhrsystem nach Anspruch 2, wobei der UO-Permeatspeichertank (15) ein druckbeaufschlagter Tank ist.

5. Wasserzufuhrsystem nach Anspruch 1, ferner umfassend eine Verrohrung, die mit der Umkehrosmosevorrichtung (7) verbunden ist, um UO-Ausschusswasser zu einem Ablauf (39) zu liefern, und wobei die Sprühpumpe (17) enthärtetes Wasser direkt vom Wasserenthärter (3) empfängt.

6. Wasserzufuhrsystem nach Anspruch 5, ferner umfassend eine UO-Ausschusspumpe (47), verbunden mit der Umkehrosmosevorrichtung (7) zum Pumpen von UO-Ausschusswasser (9) zur Sprühpumpe (17).

7. Verfahren zum Unterbinden von Kesselsteinbildung und Korrosion von Metalloberflächen in einem Wärmetauscher, der zum adiabatischen Kühlen von Luft unter Verwendung eines Systems nach Ansprüchen 1-6 verwendet wird, Folgendes umfassend:
Empfangen von Wasser von der Wasserquelle;
Enthärten des Wassers von der Wasserquelle im Wasserenthärter (3), dadurch enthärtetes Wasser produzierend;
Liefern des enthärteten Wassers (5) zur Umkehrosmosevorrichtung (7), dadurch ein UO-Ausschusswasser und ein UO-Permeatwasser produzierend, und Anwenden einer Kühloperation und einer Spüloperation;
wobei die Kühloperation Speichern zumindest eines Teils des UO-Permeatwassers aus der Umkehrosmosevorrichtung (7) in dem UO-Permeatspeichertank (13) umfasst; und Liefern von UO-Ausschusswasser aus dem UO-Ausschussspeichertank (11), das UO-Ausschusswasser von der Umkehrosmosevorrichtung (7) empfängt, und optional eines Teils des UO-Permeatwassers zu den Sprühdüsen (19) über die UO-Ausschusswasserleitung (9);
wobei die Spüloperation Liefern des gespeicherten UO-Permeatwassers zu den Oberflächen der Wendel über die Wendelspülleitung (25) umfasst.

8. Verfahren nach Anspruch 7, wobei gespeichertes UO-Permeatwasser (13) auch während der Kühloperation zu den Sprühdüsen (19) geliefert wird, sofern ausreichend UO-Permeatwasser zur Verwendung während einer anschließenden Spüloperation im Speicher zurückgehalten wird.

9. Verfahren nach Anspruch 7, wobei UO-Ausschusswasser (9) von der Umkehrosmosevorrichtung (7) mit enthärtetem Wasser, das während einer Kühloperation direkt von einem Wasserenthärter (3) empfangen und zu den Sprühdüsen (19) geliefert wird, kombiniert wird.

10. Verfahren nach Anspruch 7, wobei UO-Ausschusswasser (9) von der Umkehrosmosevorrichtung (7) mit enthärtetem Wasser, das direkt von einem Wasserenthärter (3) empfangen und in einem Kombinier- und Speichertank (29) gespeichert wird, kombiniert wird, und wobei Wasser aus dem Kombinier- und Speichertank während einer Kühloperation zu den Sprühdüsen (19) geliefert wird.

11. Verfahren nach Anspruch 7, wobei das gespeicherte UO-Permeatwasser (13) in einem druckbeaufschlagten Tank gespeichert wird.

12. Verfahren nach Anspruch 10, wobei das gespeicherte UO-Permeatwasser (13) in einem druckbeaufschlagten Tank gespeichert wird.

## Revendications

1. Système d'alimentation en eau pour livrer de l'eau utilisée pour refroidir adiabatiquement de l'air dans un échangeur de chaleur, comprenant :
un adoucisseur d'eau (3) configuré pour recevoir de l'eau en provenance d'une source d'eau ;
un dispositif à osmose inverse (7) configuré pour recevoir de l'eau adoucie (5) en provenance dudit adoucisseur d'eau ;
un réservoir de stockage de perméat d'OI (15) configuré pour recevoir de l'eau de perméat d'OI (13) en provenance dudit dispositif à osmose inverse ;
une pompe de rinçage (21) configurée pour livrer de l'eau de perméat d'OI (13) provenant dudit réservoir de stockage de perméat d'OI (15) à des surfaces d'un serpentin dudit échangeur de chaleur par l'intermédiaire d'une conduite de rinçage de serpentin (25) ;
un réservoir de stockage de rejet d'OI (11) configuré pour recevoir de l'eau de rejet d'OI (9) en provenance dudit dispositif à osmose inverse (7) ;
une conduit d'eau de perméat d'OI (13) comprenant une vanne (14) configurée pour livrer de l'eau de perméat d'OI provenant du réservoir de stockage de perméat d'OI (15) à une pompe de pulvérisation (17) ;
une conduite d'eau de rejet d'OI (9) comprenant une vanne (16) configurée pour livrer de l'eau de rejet d'OI provenant du réservoir de stockage de rejet d'OI (11) à la pompe de pulvérisation (17) ;
des buses de pulvérisation (19) recevant de l'eau en provenance de la pompe de pulvérisation (17) par l'intermédiaire d'une conduite de buses de pulvérisation (23).

2. Système d'alimentation en eau selon la revendication 1, dans lequel ledit réservoir de stockage de rejet d'OI (11) est configuré pour recevoir de l'eau adoucie directement en provenance dudit adoucisseur (3) et de l'eau de rejet d'OI (9) en provenance dudit dispositif à osmose inverse (7), et dans lequel ladite pompe de pulvérisation (17) est configurée pour livrer de l'eau adoucie et de l'eau de rejet d'OI combinées provenant du réservoir de stockage de rejet d'OI (11) auxdites buses de pulvérisation (19).

3. Système d'alimentation en eau selon la revendication 1, dans lequel ledit réservoir de stockage de perméat d'OI (15) est un réservoir sous pression.

4. Système d'alimentation en eau selon la revendication 2, dans lequel ledit réservoir de stockage de perméat d'OI (15) est un réservoir sous pression.

5. Système d'alimentation en eau selon la revendication 1, comprenant en outre une tuyauterie raccordée audit dispositif à osmose inverse (7) pour livrer de l'eau de rejet d'OI à une évacuation (39), et dans lequel ladite pompe de pulvérisation (17) reçoit de l'eau adoucie directement en provenance dudit adoucisseur d'eau (3).

6. Système d'alimentation en eau selon la revendication 5, comprenant en outre une pompe de rejet d'OI (47) raccordée audit dispositif à osmose inverse (7) pour pomper de l'eau de rejet d'OI (9) jusqu'à ladite pompe de pulvérisation (17).

7. Procédé pour empêcher l'entartrage et la corrosion de surfaces métalliques dans un échangeur de chaleur utilisé pour refroidir adiabatiquement de l'air en utilisant un système selon les revendications 1 à 6, comprenant :
la réception d'eau en provenance de la source d'eau ;
l'adoucissement d'eau, provenant de la source d'eau, dans l'adoucisseur d'eau (3), ainsi produisant de l'eau adoucie ;
la livraison de l'eau adoucie (5) au dispositif à osmose inverse (7), ainsi produisant une eau de rejet d'OI et une eau de perméat d'OI, et l'application d'une opération de refroidissement et d'une opération de rinçage ;
moyennant quoi l'opération de refroidissement comprend le stockage d'au moins une partie de l'eau de perméat d'OI provenant dudit dispositif à osmose inverse (7) dans ledit réservoir de stockage de perméat d'OI (13) ;
et la livraison d'eau de rejet d'OI provenant dudit réservoir de stockage de rejet d'OI (11), recevant de l'eau de rejet d'OI en provenance dudit dispositif à osmose inverse (7), et facultativement d'une partie de l'eau de perméat d'OI auxdites buses de pulvérisation (19) par l'intermédiaire de ladite conduite d'eau de rejet d'OI (9) ;
moyennant quoi l'opération de rinçage comprend la livraison de ladite eau stockée de perméat d'OI aux surfaces dudit serpentin par l'intermédiaire de ladite conduite de rinçage de serpentin (25).

8. Procédé selon la revendication 7, dans lequel de l'eau de perméat d'OI stockée (13) est également livrée auxdites buses de pulvérisation (19) durant ladite opération de refroidissement, à condition qu'une quantité suffisante d'eau de perméat d'OI est retenue en stockage pour l'utilisation durant une opération de rinçage subséquente.

9. Procédé selon la revendication 7, dans lequel de l'eau de rejet d'OI (9) provenant dudit dispositif à osmose inverse (7) est combinée avec de l'eau adoucie reçue directement en provenance d'un adoucisseur d'eau (3) et livrée auxdites buses de pulvérisation (19) durant une opération de refroidissement.

10. Procédé selon la revendication 7, dans lequel de l'eau de rejet d'OI (9) provenant dudit dispositif à osmose inverse (7) est combinée avec de l'eau adoucie reçu directement en provenance d'un adoucisseur d'eau (3) et stockée dans un réservoir de combinaison et de stockage (29), et de l'eau provenant dudit réservoir de combinaison et de stockage est livrée auxdites buses de pulvérisation (19) durant une opération de refroidissement.

11. Procédé selon la revendication 7, dans lequel ladite eau de perméat d'OI stockée (13) est stockée dans un réservoir sous pression.

12. Procédé selon la revendication 10, dans lequel ladite eau de perméat d'OI stockée (13) est stockée dans un réservoir sous pression.
